# FASCICULE DE BREVET EUROPEEN

(11) **EP 3 409 421 B1**
(45) Date de publication et mention de la délivrance du brevet: **27.11.2019**
(21) Numéro de dépôt: 18170845.4
(22) Date de dépôt: 04.05.2018
(51) Int. Cl.: B24C 5/00, B24C 1/10, B24C 1/08, B23P 15/00

(54) **PROCÉDÉ DE GRENAILLAGE ET POLISSAGE POUR PIÈCE DE TURBOMACHINE**
VERFAHREN ZUM KUGELSTRAHLEN UND POLIEREN FÜR BAUTEIL EINER TURBOMASCHINE
SHOT-BLASTING AND POLISHING METHOD FOR TURBINE ENGINE PART

(30) Priorité: 31.05.2017 BE 201705389
(43) Date de publication de la demande: 05.12.2018
(73) Titulaire: Safran Aero Boosters SA, 4041 Herstal (BE)
(72) Inventeur: ENGLEBERT, Eric, 4540 Amay (BE)
(74) Mandataire: Lecomte & Partners

(56) Documents cités:
- US-A1- 2009 235 526
- US-A1- 2010 287 772
- US-A1- 2012 266 426
- US-A1- 2015 013 412
- US-A1- 2017 001 280

## Description

### Domaine technique

L'invention concerne le traitement de surface d'une pièce de turbomachine. Plus précisément, l'invention traite d'un procédé de grenaillage d'une pièce de turbomachine, notamment d'un turboréacteur d'avion ou d'un turbopropulseur d'aéronef, selon le préambule de la revendication indépendante 1. Un tel procédé est connu du document US 2009/0235526 A1.

### Technique antérieure

Les vibrations sollicitent en fatigue les aubes de turbomachines. En fonctionnement, des fissures apparaissent et se développent depuis les surfaces extérieures des aubes. Les fissures peuvent aussi trouver leur origine dans un des procédés de fabrication employés. Afin de contrer la propagation de ces fissures, il est connu d'effectuer un traitement de surface par grenaillage. Ce grenaillage crée une contrainte ou précontrainte de compression qui tend à refermer une éventuelle fissure dès sa naissance.

Or ce grenaillage marque les surfaces traitées et augmente leurs rugosités, ce qui freine le bon écoulement des flux contre ces mêmes surfaces. Un polissage devient nécessaire. Le polissage facilite l'écoulement au contact des surfaces intrados et des surfaces extrados des aubes. Ainsi, le débit et le rendement de la turbomachine sont améliorés.

Le document US2009235526 A1 divulgue un procédé de réalisation d'un tambour aubagé pour turbomachine axiale. Le tambour comporte une suite de disques qui sont soudés les uns aux autres, puis qui subissent un traitement thermique. Le tambour subit un grenaillage. Les surfaces obtenues sont lissées à l'aide d'une pâte abrasive. Le polissage est effectué dans un réservoir contenant le tambour. Ce procédé permet de réaliser des surfaces respectant des critères de qualité élevés, cependant leurs obtentions demeurent onéreuses.

En outre, le polissage reste perfectible, par exemple dans les zones peu accessibles. En complément, les pièces aéronautiques ne présentent qu'un nombre limité de surfaces de maintien pour leur manipulation lors du polissage, ce qui complique cette opération. Leurs déformabilités et leurs fragilités contraignent les efforts admissibles.

### Résumé de l'invention

### Problème technique

L'invention a pour objectif de résoudre au moins un des problèmes posés par l'art antérieur. Plus précisément, l'invention a pour objectif d'améliorer le polissage d'une pièce de turbomachine. L'invention a également pour objectif de proposer une solution résistante, homogène, reproductible, d'inspection aisée, et améliorant le rendement.

### Solution technique

L'invention a pour objet un procédé de fabrication d'une pièce de turbomachine axiale, notamment de compresseur de turboréacteur d'aéronef, le procédé comprenant les étapes suivantes : (a) fourniture ou réalisation d'une pièce avec une surface à traiter ; (b) mise en place de la pièce dans une enceinte contenant des grains ; (c) grenaillage préférentiellement par ultrasons de la surface à l'aide des grains ; remarquable en ce que l'enceinte contient une pâte abrasive mélangée aux grains de manière à polir la surface grenaillée lors de l'étape (c) grenaillage.

Selon des modes avantageux de l'invention, le procédé peut comprendre une ou plusieurs des caractéristiques suivantes, prises isolément ou selon toutes les combinaisons techniques possibles :
- A l'étape (c) grenaillage, la rugosité Ra de la surface grenaillée devient inférieure ou égale à : 1,00 µm, ou 0,40 µm.
- A l'issue de l'étape (c) grenaillage, la surface grenaillée présente une rugosité Ra variant localement d'au plus 20% par rapport à la rugosité moyenne de ladite surface grenaillée.
- A l'issue de l'étape (c) grenaillage, la surface grenaillée présente une contrainte de compression supérieure ou égale à : 100 MPa, ou à 800 MPa.
- La contrainte de compression ajoutée de l'étape (c) grenaillage est présente dans une couche d'épaisseur inférieure ou égale à : 1,00 mm, ou 0,30 mm, ou 0,10 mm.
- Lors de l'étape (c) grenaillage, la rugosité Ra de la surface grenaillée diminue en même temps que sa contrainte de compression augmente.
- La surface grenaillée est réalisée en titane ou en alliage de titane.
- Les grains sont des billes.
- La pâte abrasive est une pâte abrasive fluide.
- A l'étape (c) grenaillage, la pâte abrasive effectue un enlèvement de matière de la surface grenaillée de la pièce.
- Les grains et la pâte abrasive forment un mélange homogène au contact de la surface grenaillée lors de l'étape (c) grenaillage.
- La pièce est/ou comprend une paroi annulaire destinée à guider un flux annulaire de la turbomachine, la paroi annulaire étant éventuellement une paroi de carter de la turbomachine, telle une tuyère.
- La pièce est/ou comprend une aube de turbomachine, la surface grenaillée formant éventuellement une surface intrados et une surface extrados de l'aube.
- La pièce est/ou comprend un disque avec une jante et une rangée annulaire d'aubes réparties autour du disque, la jante et lesdites aubes formant un ensemble monobloc.
- La pièce est/ou comprend un tambour avec un voile annulaire et plusieurs rangées annulaires d'aubes réparties autour du voile annulaire, les rangées annulaires étant réparties axialement le long du voile annulaire et formant avec ledit voile annulaire un ensemble monobloc.
- La ou chaque aube comprend un rayon de raccordement dont la rugosité diminue lors de l'étape (c) grenaillage.
- L'aube comprend un bord d'attaque et un bord de fuite, le rayon de raccordement s'étendant du bord d'attaque au bord de fuite de l'aube.
- La pièce présente un évidement central présentant un sens principal d'augmentation de largeur, lors l'étape (c) grenaillage la pièce est orientée avec son sens principal d'augmentation de largeur vers le haut.
- A l'étape (a) fourniture ou réalisation, la surface est une surface provisoire ou brute, et à l'issue de l'étape (c) grenaillage, la surface devient une surface définitive de la pièce.
- Le procédé comprend en outre une étape (d) équilibrage dynamique de la pièce, prenant en compte l'évolution de la masse de la pièce au niveau de sa surface grenaillée.
- Lors de l'étape (c) grenaillage, la contrainte mécanique en compression de la surface augmente.
- La contrainte est une précontrainte de compression superficielle.
- La surface comprend un rayon de raccordement dont la rugosité Ra diminue lors de l'étape (c) grenaillage.
- La pièce est une pièce de compresseur de turbomachine, éventuellement un compresseur basse-pression.
- La turbomachine est un turboréacteur d'aéronef.
- Le voile présente un sens d'augmentation générale de diamètre, lors l'étape (c) grenaillage le tambour est orienté avec son sens d'augmentation générale de diamètre vers le haut.
- La pièce est configurée pour tourner à une vitesse de rotation supérieure ou égale à : 4000 tr/min, ou 10000 tr/min, ou 18000 tr/min.
- La pièce comprend un disque aubagé monobloc.
- La pièce comprend un tambour aubagé monobloc.
- L'aube comprend une base et/ou un support de fixation avec une surface de guidage d'un flux annulaire de la turbomachine, ladite aube s'étendant perpendiculairement par rapport à ladite surface.
- Lors de l'étape (c) grenaillage, la fréquence de vibration des grains est supérieure ou égale à : 10 KHz, ou 20 KHz.
- Lors de l'étape (c) grenaillage, l'amplitude moyenne de déplacement des grains est inférieure ou égale à : 5mm, ou 1mm, ou 0,1mm.
- La pièce présente une épaisseur, la surface comprenant une surface concave et une surface convexe qui est à l'opposé de la surface concave selon l'épaisseur de ladite pièce, lesdites surfaces étant grenaillées et polies simultanément lors de l'étape (c) grenaillage.
- Au moins une ou chaque rangée annulaire d'aube de tambour ou de disque comprend au moins : cinquante, ou quatre-vingt, ou cent aubes.
- La paroi annulaire supporte au moins une ou plusieurs rangées annulaires d'aubes.

Les caractéristiques présentées en relation avec chaque aube peuvent s'appliquer aux aubes de disque, aux aubes de tambour, aux aubes de paroi annulaire.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire ne soit explicitement précisé.

### Avantages apportés

L'invention améliore de manière homogène le traitement de surface. En effet, les grains portent et appliquent le moyen abrasif dans les moindres recoins à traiter, quelle que soit l'accessibilité et la visibilité de ces recoins. Le phénomène des chocs des grains améliore l'efficacité de l'abrasif.

Dans le contexte d'une roue aubagée, le polissage des faces des aubes comme des rayons de raccordement reste de qualité malgré la présence de moignons ou d'aubes qui forment des masques et des obstacles à contourner. Le bénéfice reste constant même en cas de présence d'autres rangées d'aubes au voisinage des surfaces à traiter, comme dans un tambour aubagé monobloc. A l'étape (a) fourniture ou réalisation, la surface est une surface provisoire ou brute, et à l'issue de l'étape (c) grenaillage, la surface devient une surface définitive de la pièce. La contrainte interne, la géométrie et le fini de surface poli miroir peuvent être directement utilisés dans une turbomachine, et éventuellement respecter les normes de sécurité aéronautique.

### Brève description des dessins

La figure 1 représente une turbomachine axiale selon l'invention.
La figure 2 est un schéma d'une enceinte de grenaillage recevant une pièce de turbomachine selon l'invention.
La figure 3 illustre un diagramme du procédé de fabrication d'une pièce de turbomachine axiale selon l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation.

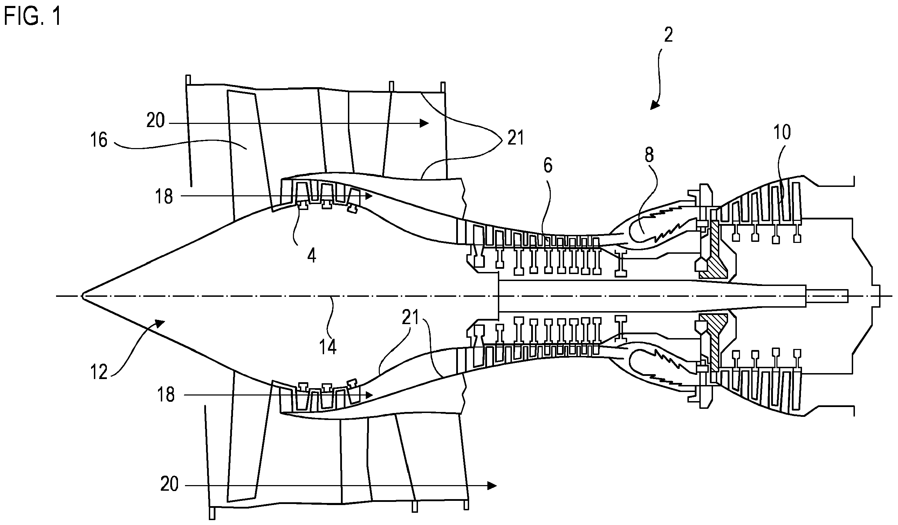

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux susmentionnés de la turbomachine, et en un flux secondaire 20 traversant un conduit annulaire (partiellement représenté) le long de la machine pour ensuite rejoindre le flux primaire en sortie de turbine. La soufflante comporte typiquement une grille circulaire d'aubes, éventuellement de vingt à trente aubes.

Le flux secondaire peut être accéléré de sorte à générer une réaction de poussée nécessaire au vol d'un avion. Les flux primaire 18 et secondaire 20 sont des flux annulaires coaxiaux et emmanchés l'un dans l'autre. Ils sont canalisés par le carter de la turbomachine. A cet effet, le carter présente des parois annulaires 21 qui peuvent être internes et externes.

Une paroi annulaire 21 peut délimiter la veine primaire traversée par le flux primaire 18. Une paroi annulaire 21 peut connecter le compresseur basse-pression 4 au compresseur haute-pression 6, ou ce dernier à la chambre de combustion 8. Les parois annulaires 21 peuvent former une tuyère ou une buse annulaire canalisant le flux primaire 18 ou le flux secondaire 20.

Dans le compresseur basse-pression 4, le rotor 12 comprend plusieurs rangées d'aubes rotoriques, par exemple trois. Le rotor 12 peut comprendre un disque aubagé et/ou un tambour aubagé. Le disque comme le tambour peuvent être monoblocs. C'est-à-dire que les aubes et leur disque, ou les aubes et leur tambour, forment un même solide.

Le compresseur basse-pression 4 comprend plusieurs redresseurs, éventuellement quatre, qui contiennent chacun une rangée d'aubes statoriques. Les redresseurs sont associés au fan 16 ou à une rangée d'aubes rotoriques pour redresser le flux d'air, de sorte à convertir la vitesse du flux en pression, notamment en pression statique. Les rangées d'aubes rotoriques et d'aubes statoriques sont placées axialement par alternance.

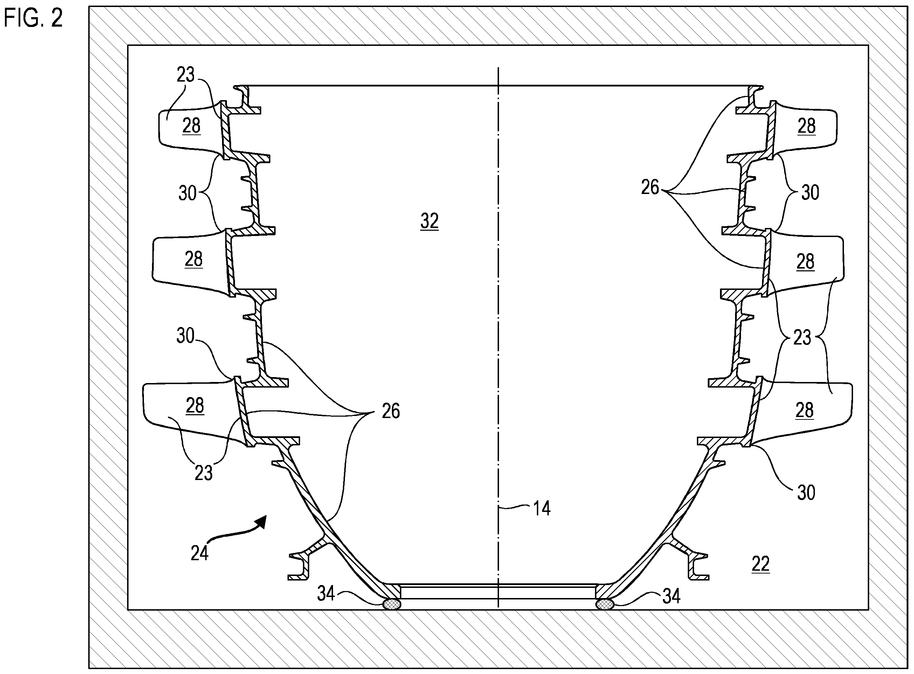

La figure 2 représente une enceinte 22 d'une machine de grenaillage ultrason. La machine comporte une source d'ultrason (non représentée) excitant en vibration des grains (non représentés) dont les mouvements permettent un grenaillage lorsqu'ils percutent la surface d'une pièce à traiter. Les grains, ou grenaille, présentent une dureté supérieure à celle de la surface grenaillée 23 de la pièce.

Selon l'invention, une pâte abrasive est mélangée aux grains, notamment de manière homogène, si bien qu'un polissage s'opère en même temps que le grenaillage. Les grains peuvent être des billes. La pâte abrasive peut être fluide. Elle peut enrober les grains pour qu'ils polissent la surface en même temps qu'ils l'écrouissent.

L'enceinte de grenaillage 22 reçoit une pièce, en l'occurrence un tambour aubagé monobloc 24, qui subit un traitement de surface par grenaillage ultrason. Le tambour 24 peut correspondre à celui présenté en relation avec la figure 1. En complément, une telle enceinte 22 peut également recevoir une aube, un disque aubagé, une paroi annulaire tels que décrits en relation avec la figure 1.

Le tambour 24 présente un voile annulaire 26 supportant plusieurs rangées annulaires d'aubes rotoriques 28. Ces rangées sont réparties axialement le long de l'axe de rotation 14 du tambour 24. Par ailleurs, les aubes 28, notamment leurs surfaces extérieures présentent des rayons de raccordement 30 à leurs jonctions avec le voile annulaire 26. Ces rayons de raccordement 30 forment des recoins dont l'accessibilité est limitée par les aubes 28 elles-mêmes. La hauteur radiale et le rapprochement des aubes 28 accentuent la complexité.

La surface intrados et la surface extrados de l'aube 28 peuvent former la surface grenaillée 23 de la pièce. Cette surface grenaillée peut également être formée sur le voile 26, notamment d'où s'étendent les aubes 28. Donc, la surface grenaillée 23 peut être localement annulaire.

Chaque rayon de raccordement 30 peut entourer l'aube 28 correspondante. Il peut longer la surface intrados et la surface extrados de l'aube 28 associée. Il peut débuter au niveau du voile annulaire 26, et/ou relier le bord d'attaque au bord de fuite de l'aube 28, sur ses deux faces. Au grenaillage, les rugosités Ra des rayons de raccordement 30 peuvent diminuer, notamment sur toutes leurs longueurs. La rugosité des rayons de raccordement 30 peut être homogène d'un bord d'attaque au bord de fuite malgré la finesse de la pièce à ces bords. Un disque aubagé (non représenté) peut comprendre une unique rangée d'aubes 28, il peut s'apparenter au tambour en ce que sa jante forme un tronçon axial de voile annulaire 26 qui porte lesdites aubes 28.

La pièce peut comprendre un évidement principal, ou évidement central 32. Lors du grenaillage, le mélange grains-pâte abrasive peut être dans l'enceinte 22, et en dehors de la pièce. Le mélange peut être en dehors de l'évidement 32. Un joint 34 peut être placé en extrémité axiale de la pièce pour retenir le mélange.

La pièce, notamment son évidement 32, présente une diminution de largeur ou de diamètre général(e). Lors de son traitement de surface, sa diminution de largeur, ou moindre largeur, peut être placée en bas.

La pièce, et donc sa ou ses surfaces grenaillées 23, peut être réalisée en titane ou en alliage de titane, éventuellement intégralement. Elle peut être du type Ti6Al4V. D'autres matériaux sont envisageables.

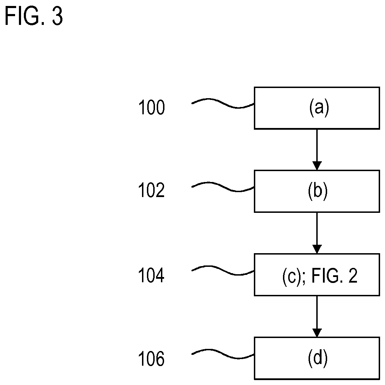

La figure 3 est un diagramme du procédé de fabrication d'une pièce de turbomachine. La pièce correspondante peut être l'une de celles évoquées en relation avec l'une des figures 1 ou 2 ; dont : une aube, une paroi annulaire, un disque aubagé, un tambour aubagé.

Le procédé peut comprendre les étapes suivantes, notamment réalisées dans l'ordre qui suit :
(a) fourniture ou réalisation 100 d'une pièce, éventuellement brute ou ébauchée, avec une surface provisoire à traiter,
(b) mise en place 102 de la pièce dans une enceinte contenant des grains, la surface à traiter étant en contact des grains ;
(c) grenaillage par ultrason 104 de la surface provisoire à l'aide des grains mélangés à une pâte abrasive ;
(d) équilibrage dynamique 106 de la pièce lorsqu'il s'agit d'une pièce rotorique, tel un disque ou un tambour de turbomachine. La présente étape est optionnelle dans le contexte de l'invention.

A l'étape (a) fourniture ou réalisation 100, la pièce peut être produite par fabrication additive par couches à base de poudre. Un tambour ou un disque peuvent être produits par usinage d'un brut préalablement forgé. Les aubes peuvent être soudées à même un voile annulaire ou une jante. La soudure peut être par friction, ou par faisceau d'électrons. Eventuellement, la pièce peut être taillée dans la masse et/ou issue de fonderie.

A l'étape (b) mise en place 102, la pièce est introduite dans l'enceinte, puis éventuellement ensevelie par le mélange grains/pâte. Ce mélange peut être versé dans l'enceinte afin de venir au contact de la surface à traiter de la pièce. Seul l'extérieur de la pièce peut être au contact du mélange, son évidement peut rester vide de mélange.

La figure 2 peut être représentative de l'étape (c) grenaillage 104.

A l'étape (c) grenaillage, la rugosité Ra de la surface peut devenir d'au plus : 3,2 micromètre, ou 1,60 µm, ou 0,4 µm, ou 0,20 µm. En complément, le résultat est homogène puisqu'à l'issue de l'étape (c) grenaillage, la surface grenaillée présente une rugosité Ra variant localement au maximum de: 50%, ou 35%, ou 20%, 10%, ou 5%, par rapport à la rugosité moyenne de ladite surface grenaillée. Les aspérités sont érodées, laissant place à une surface traitée particulièrement lisse pour faciliter l'écoulement d'un fluide transsonique de turboréacteur.

En parallèle du polissage, la mise en compression de la surface s'opère, éventuellement en continu. A l'issue de l'étape (c) grenaillage 102, la surface présente une contrainte de compression supérieure ou égale à : 50 MPa, ou 100 Mpa, ou 800 MPa, ou 1000 MPa. Aussi, la contrainte de compression reste surfacique. Elle est produite sur la surface grenaillée sur une profondeur inférieure ou égale à : 1,00 mm, ou 0,30 mm, ou 0,10 mm.

Le critère d'homogénéité de rugosité peut être transposé à l'homogénéité de contrainte de compression.

L'étape (d) équilibrage dynamique 106 corrige et prend en compte l'évolution de la masse de la pièce au niveau de sa surface grenaillée. Il peut s'agir d'une recherche et d'une correction de balourd de pièce rotorique, tel que le présente le disque aubagé ou le tambour aubagé. A l'étape (d) équilibrage dynamique 106, la contrainte de compression reste présente.

Le procédé peut également comprendre un traitement thermique et/ou un traitement chimique de la surface grenaillée.

## Revendications

1. Procédé de fabrication d'une pièce de turbomachine axiale (2), notamment de compresseur (4 ; 6) de turboréacteur d'aéronef, le procédé comprenant les étapes suivantes :
(a) fourniture ou réalisation (100) d'une pièce avec une surface à traiter,
(b) mise en place (102) de la pièce dans une enceinte (22) contenant des grains ; et
(c) grenaillage (104), préférentiellement par ultrasons, de la surface à l'aide des grains ;
**caractérisé en ce que**
l'enceinte (22) contient une pâte abrasive mélangée aux grains de manière à polir la surface grenaillée (23) lors de l'étape (c) grenaillage (104).

2. Procédé selon la revendication 1, **caractérisé en ce qu'**à l'étape (c) grenaillage (104), la rugosité Ra de la surface grenaillée (23) devient inférieure ou égale à : 1,00 µm, ou 0,40 µm, préférentiellement variant localement d'au plus 20% par rapport à la rugosité moyenne de ladite surface grenaillée.

3. Procédé selon l'une des revendications 1 ou 2, **caractérisé en ce qu'**à l'issue de l'étape (c) grenaillage (104), la surface grenaillée (23) présente une contrainte de compression supérieure ou égale à : 100 MPa, ou à 800 MPa, préférentiellement présente dans une couche d'épaisseur inférieure ou égale à : 1,00 mm, ou 0,30 mm, ou 0,10 mm.

4. Procédé selon l'une des revendications 1 à 3, **caractérisé en ce que** lors de l'étape (c) grenaillage (104), la rugosité Ra de la surface grenaillée (23) diminue en même temps que sa contrainte de compression augmente.

5. Procédé selon l'une des revendications 1 à 4, **caractérisé en ce que** la surface grenaillée (23) est réalisée en titane ou en alliage de titane.

6. Procédé selon l'une des revendications 1 à 5, **caractérisé en ce que** les grains sont des billes.

7. Procédé selon l'une des revendications 1 à 6, **caractérisé en ce que** la pâte abrasive est une pâte abrasive fluide.

8. Procédé selon l'une des revendications 1 à 7, **caractérisé en ce qu'**à l'étape (c) grenaillage (104), la pâte abrasive effectue un enlèvement de matière de la surface grenaillée (23) de la pièce.

9. Procédé selon l'une des revendications 1 à 8, **caractérisé en ce que** les grains et la pâte abrasive forment un mélange homogène au contact de la surface grenaillée (23) lors de l'étape (c) grenaillage (104).

10. Procédé selon l'une des revendications 1 à 9, **caractérisé en ce que** la pièce est/ou comprend une paroi annulaire (21) destinée à guider un flux annulaire de la turbomachine (2), la paroi annulaire (21) étant éventuellement une paroi de carter de la turbomachine, telle une tuyère.

11. Procédé selon l'une des revendications 1 à 10, **caractérisé en ce que** la pièce est/ou comprend une aube (28) de turbomachine (2), la surface grenaillée (23) formant éventuellement une surface intrados et une surface extrados de l'aube (28).

12. Procédé selon l'une des revendications 1 à 11, **caractérisé en ce que** la pièce est/ou comprend un disque avec une jante et une rangée annulaire d'aubes (28) réparties autour du disque, la jante et lesdites aubes (28) formant un ensemble monobloc.

13. Procédé selon l'une des revendications 1 à 12, **caractérisé en ce que** la pièce est/ou comprend un tambour (24) avec un voile annulaire (26) et plusieurs rangées annulaires d'aubes (28) réparties autour du voile annulaire (26), les rangées annulaires étant réparties axialement le long du voile annulaire (26) et formant avec ledit voile annulaire (26) un ensemble monobloc.

14. Procédé selon l'une des revendications 11 à 13, **caractérisé en ce que** la ou chaque aube (28) comprend un rayon de raccordement (30) dont la rugosité diminue lors de l'étape (c) grenaillage (104).

15. Procédé selon l'une des revendications 1 à 14, **caractérisé en ce qu'**il comprend en outre une étape (d) équilibrage dynamique (106) de la pièce, prenant en compte l'évolution de la masse de la pièce au niveau de sa surface grenaillée (23).

## Patentansprüche

1. Verfahren zur Herstellung eines Teils einer axialen Turbomaschine (2), insbesondere eines Kompressors (4; 6) eines Turbotriebwerks eines Luftfahrzeuges, wobei das Verfahren die folgenden Schritte umfasst:
(a) Bereitstellen oder Herstellen (100) eines Teils mit einer zu behandelnden Oberfläche;
(b) Platzieren (102) des Teils in einer Einschließung (22), die Körner enthält; und
(c) Abstrahlen (104), vorzugsweise mittels Ultraschall, der Oberfläche mittels der Körner;
**gekennzeichnet dadurch, dass**
die Einschließung (22) eine abrasive Paste enthält, die mit den Körnern vermischt ist, um so die abgestrahlte Oberfläche (23) während des Schrittes (c) des Abstrahlens (104) zu polieren.

2. Verfahren gemäß Anspruch 1, **gekennzeichnet dadurch, dass** bei dem Schritt (c) des Abstrahlens (104) die Rauheit Ra der abgestrahlten Oberfläche (23) kleiner oder gleich 1,00 µm oder 0,40 µm wird, wobei sie örtlich vorzugsweise höchstens um 20% im Vergleich zur mittleren Rauheit der besagten abgestrahlten Oberfläche (23) variiert.

3. Verfahren gemäß einem der Ansprüche 1 oder 2, **gekennzeichnet dadurch, dass** am Ende des Schrittes (c) des Abstrahlens (104) die abgestrahlte Oberfläche (23) eine Kompressionsspannung von größer oder gleich 100 MPa oder 800 MPa hat, die vorzugsweise in einer Schicht mit einer Dicke von weniger oder gleich 1,00 mm oder 0,30 mm oder 0,10 mm vorhanden ist.

4. Verfahren gemäß einem der Ansprüche 1 bis 3, **gekennzeichnet dadurch, dass** während des Schrittes (c) des Abstrahlens (104) die Rauheit Ra der abgestrahlten Oberfläche (23) abnimmt während gleichzeitig die Kompressionsspannung zunimmt.

5. Verfahren gemäß einem der Ansprüche 1 bis 4, **gekennzeichnet dadurch, dass** die abgestrahlte Oberfläche (23) aus Titan oder einer Titanlegierung ausgeführt ist.

6. Verfahren gemäß einem der Ansprüche 1 bis 5, **gekennzeichnet dadurch, dass** die Körner Kügelchen sind.

7. Verfahren gemäß einem der Ansprüche 1 bis 6, **gekennzeichnet dadurch, dass** die abrasive Paste eine flüssige abrasive Paste ist.

8. Verfahren gemäß einem der Ansprüche 1 bis 7, **gekennzeichnet dadurch, dass** während des Schrittes (c) des Abstrahlens (104) die abrasive Paste Material von der abgestrahlten Oberfläche (23) des Teils entfernt.

9. Verfahren gemäß einem der Ansprüche 1 bis 8, **gekennzeichnet dadurch, dass** die Körner und die abrasive Paste eine homogene Mischung bilden, die während des Schrittes (c) des Abstrahlens (104) mit der abgestrahlten Oberfläche (23) in Kontakt ist.

10. Verfahren gemäß einem der Ansprüche 1 bis 9, **gekennzeichnet dadurch, dass** das Teil eine ringförmige Wand (21) ist oder enthält, die dazu vorgesehen ist, einen ringförmigen Strom der Turbomaschine (2) zu leiten, wobei die ringförmige Wand (21) möglicherweise eine Gehäusewand der Turbomaschine ist wie eine Düse.

11. Verfahren gemäß einem der Ansprüche 1 bis 10, **gekennzeichnet dadurch, dass** das Teil ein Schaufelblatt (28) einer Turbomaschine (2) ist oder enthält, wobei die abgestrahlte Oberfläche (23) möglicherweise eine außenseitige Oberfläche und eine innenseitige Oberfläche des Schaufelblattes (28) bildet.

12. Verfahren gemäß einem der Ansprüche 1 bis 11, **gekennzeichnet dadurch, dass** das Teil eine Scheibe mit einer Felge und einer ringförmigen Reihe von Schaufelblättern (28), die um die Scheibe herum verteilt sind, ist oder enthält, wobei die Felge und die besagten Schaufelblätter (23) eine einstückige Gesamtheit bilden.

13. Verfahren gemäß einem der Ansprüche 1 bis 12, **gekennzeichnet dadurch, dass** das Teil eine Trommel (24) mit einer ringförmigen Umhüllung (26) und mehreren ringförmigen Reihen von Schaufelblättern (28), die um die ringförmige Umhüllung (26) herum verteilt sind, ist oder enthält, wobei die ringförmigen Reihen axial entlang der ringförmigen Umhüllung (26) verteilt sind und mit der besagten ringförmigen Umhüllung (26) eine einstückige Gesamtheit bilden.

14. Verfahren gemäß einem der Ansprüche 11 bis 13, **gekennzeichnet dadurch, dass** das oder jedes Schaufelblatt (28) einen Übergangsradius (30) umfasst, dessen Rauheit während des Schrittes (c) des Abstrahlens (104) abnimmt.

15. Verfahren gemäß einem der Ansprüche 1 bis 14, **gekennzeichnet dadurch, dass** es weiter einen Schritt (d) des dynamischen Auswuchtens (106) des Teils umfasst, der die Veränderung der Masse des Teils an seiner abgestrahlten Oberfläche (23) berücksichtigt.

## Claims

1. Method for manufacturing a component of an axial turbomachine (2), preferably of an aircraft turbojet engine compressor (4; 6), the method comprising the following steps:
(a) supplying or producing (100) a component having a surface that is to be treated,
(b) placing (102) the component in a chamber (22) containing particles; and
(c) peening (104), preferably ultrasonic peening, of the surface using the particles;
**characterized in that**
the chamber (22) contains an abrasive paste mixed with the particles so as to polish the peened surface (23) during the peening (104) step (c).

2. Method according to claim 1, **characterized in that** in the peening (104) step (c), the roughness Ra of the peened surface (23) becomes less than or equal to: 1.00 µm or 0.40 µm, preferably a roughness Ra that varies locally by at most 20% with respect to the mean roughness of the said peened surface.

3. Method according to one of claims 1 or 2, **characterized in that**, at the end of the peening (104) step (c), the peened surface (23) has a compression stress greater than or equal to: 100 MPa or to 800 MPa, preferably is present in a layer of a thickness less than or equal to: 1.00 mm, or 0.30 mm, or 0.10 mm.

4. Method according to one of claims 1 to 3, **characterized in that**, during the peening (104) step (c), the roughness Ra of the peened surface (23) decreases at the same time as its compression stress increases.

5. Method according to one of claims 1 to 4, **characterized in that** the peened surface (23) is made of titanium or titanium alloy.

6. Method according to one of claims 1 to 5, **characterized in that** the particles are balls.

7. Method according to one of claims 1 to 6, **characterized in that** the abrasive paste is a fluid abrasive paste.

8. Method according to one of claims 1 to 7, **characterized in that** during the peening (104) step (c), the abrasive paste removes material from the peened surface (23) of the component.

9. Method according to one of claims 1 to 8, **characterized in that** the particles and the abrasive paste form a homogeneous mixture on contact with the peened surface (23) during the peening (104) step (c).

10. Method according to one of claims 1 to 9, **characterized in that** the component is/or comprises an annular wall (21) intended to guide an annular stream through the turbomachine (2), the annular wall (21) potentially being a turbomachine casing wall such as a nozzle.

11. Method according to one of claims 1 to 10, **characterized in that** the component is/or comprises a turbomachine (2) blade (28), the peened surface (23) potentially forming an intrados surface and an extrados surface of the blade (28).

12. Method according to one of claims 1 to 11, **characterized in that** the component is/or comprises a disc with a rim and an annular row of blades (28) distributed about the disc, the rim and the said blades (28) forming a one-piece assembly.

13. Method according to one of claims 1 to 12, **characterized in that** the component is/or comprises a drum (24) with an annular web (26) and several annular rows of blades (28) distributed around the annular web (26), the annular rows being distributed axially along the annular web (26) and forming, with the said annular web (26), a one-piece assembly.

14. Method according to one of claims 11 to 13, **characterized in that** the or each blade (28) comprises a fillet radius (30), the roughness of which decreases during the peening (104) step (c).

15. Method according to one of claims 1 to 14, **characterized in that** it further comprises a step (d) of dynamic balancing (106) of the component, taking into account the change in mass of the component at its peened surface (23).
